# EUROPEAN PATENT SPECIFICATION

(11) **EP 0 628 980 B1**
(45) Date of publication and mention of the grant of the patent: **23.07.1997**
(21) Application number: 94107687.9
(22) Date of filing: 18.05.1994
(51) Int. Cl.: H01H 35/14, B60K 28/14

(54) **Inertial device to cut-off the battery of a vehicle**
Trägheitsgerät zur Ausschaltung der Batterie eines Kraftfahrzeuges
Appareil à inertie pour l'interruption de la batterie d'une voiture

(30) Priority: 04.06.1993 IT MU930461
(43) Date of publication of application: 14.12.1994
(73) Proprietor: CAVIS S.r.l., Torino (IT)
(72) Inventor: Rubboli, Gianmario, I-22073 Fino Mornasco, Como (IT)
(74) Representative: Luksch, Giorgio, Dr.-Ing.

(56) References cited:
- CH-A- 499 412
- CH-A- 604 178
- DE-A- 2 405 749

## Description

This invention relates to a device for interrupting the current supplied by a motor vehicle battery, according to the preamble of claim 1.

An object of the invention is to provide a device of the aforesaid type which not only allows immediate disconnection of the battery from the general services panel and in particular the interruption of the hot lines so as to avoid the danger of fire by short-circuiting in the case of accidents, but also acts on certain auxiliary services such as the hazard and courtesy lights, rear safety lights, motorized window operators, door releasers etc., to set them to a position of safety for the occupants.

Document CH 499412 describes a battery cut off device comprising an inertia switch connected to a single relé which, in the case of a vehicle's accident, operates both a first switch, for automatically switching off of the power line connected to the vehicle electrical installation, and a second switch for automatically switch on the blinkers of the vehicle.

A further object of the invention is to provide a device which prevents the gasoline pump remaining in operation after an accident involving a collision.

These and further objects of the invention will be apparent to an expert of the art on reading the following description and attached claims, the latters defining the scope of protection of the invention.

The device is illustrated in schematic form in the single accompanying figure.

With reference to said schematic diagram, the device is contained within a box casing, shown by dashed lines and indicated by 1, and consists of a power switch 2 maintained closed by a mechanical anchorage so as to provide electrical power to the general services panel 6' and hence to the vehicle electrical installation.

The switch 2 is controlled by a relay 3 connected via a static switch 4 to a normally open inertia switch 5, for example of the type manufactured by First Inertia Switch Ltd. (UK).

The device connects the auxiliary services 6 to the positive of the battery B via contactors 11 which are shown here as switches for reasons of simplicity.

In normal operation the auxiliary services 6 are operated by the user depending on his requirements, for example these auxiliary services can be hazard lights 20, door releasers 21, window operators 22 etc., these services being independent of the power switch 2.

Following a vehicle collision, for example due to an accident, the inertia switch 5 closes and via a resistor 7 operates the control electrode of the static switch 4 which connects the relay 3 to the positive of the battery, this causing the power switch 2 to open and hence disconnect the battery from the general services panel 6' and isolate the battery from the vehicle electrical.

If desired, using the switch 8, by simply pressing the button 10 possibly by means of an electrical control positioned within the vehicle, the relay 3 can be de-energized to disconnect it from the positive of the battery B and hence open the power switch 2 without the need for operation of the inertia switch 5. This is particularly useful in that it enables the vehicle electrical installation to be isolated during long periods of idleness or during its transportation, while maintaining the auxiliary services panel 6 and, at the choice of the customer, the side lights live. A pushbutton 9 enables the switch 2 to be closed manually to restore the connection between the battery and the vehicle electrical installation, while the mechanical pushbutton 10 enables the power switch 2 to be switched off manually.

In addition, if an accident occurs leading to the closure of the inertia switch 5, a pulse signal is produced along the line 12 to operate a relay 13 closing contacts 14 which short-circuit the contacts 11 and hence operate the auxiliary services 20, 21, 22 (specified heretofore) independently of the state of the switches 11, said services being able to visually indicate the accident and to enable or facilitate the exit of the occupants from the accident-damaged vehicle.

If the vehicle is provided with an alternator 23 which, although not necessarily directly, powers the gasoline pump 24, this in the case of an accident can remain energized for a time which even if short can result in the feed of a quantity of gasoline sufficient to represent a dangerous source of explosion or fire, hence the invention provides between the alternator 23 and pump 24 a relay 25 (with a closure delay of between 30 seconds and one minute) of normally closed contacts which, in the case of an accident causing the inertia switch 5 to operate, open and remain open for the delay time by the action of a pulse signal transmitted through the line 26 connected to the inertia switch.

If the user manually opens the power switch 2, the relay 3 also remains disconnected as is clear from the electrical scheme, hence without compromising battery charging.

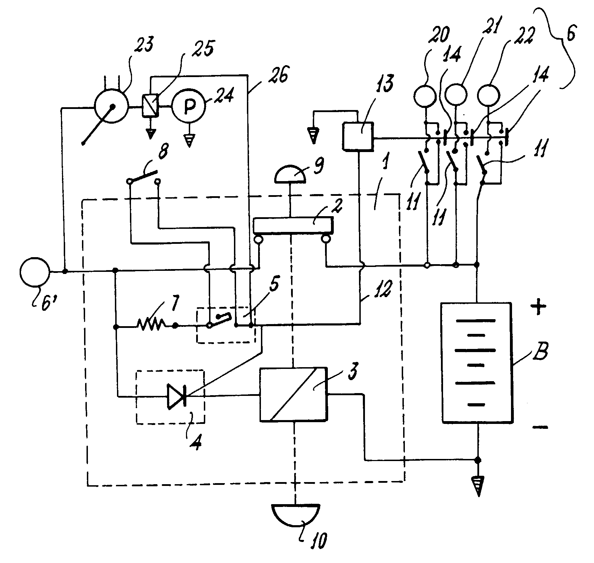

## Claims

1. A device for interrupting the current supplied by a motor vehicle battery, comprising an inertia switch (5) controlling a first relay (3) associated with a normally closed mechanical power switch (2) connected into the feed line to the vehicle electrical installation (6'), and controlling first contacts (14) connected to auxiliary warning and safety services (20, 21, 22), the operation of said inertia switch determining the energization of said first relay, causing the opening of said mechanical power switch, and the setting or maintaining in a state favourable to the safety or protection of the occupants of the warning and safety services (20, 21, 22) connected to said first contacts (14); characterised in that it comprises a second relay (13) connected to said inertia switch (5) and said first contacts (14), the operation of said inertia switch determining the energization of said second relay (13) causing the setting or maintaining of said services (20, 21, 22) in a state favourable to the safety of the occupants.

2. A device as claimed in claim 1, characterised in that the auxiliary services (20, 21, 22) are connected between said power switch (2) and a pole of a battery (B), and are conventionally controlled by contactor means (11) short-circuited by the second relay (13) on operation of the inertia switch (5).

3. A device as claimed in the preceding claims, characterised in that said mechanical power switch (2) can be closed by a manual push-button (9).

4. A device as claimed in the preceding claims, characterised by comprising a manual mechanical switch (10) for excluding said first relay (3).

5. A device as claimed in the preceding claims, characterised by comprising a manual electrical switch (8) for energizing said first relay (3).

6. A device as claimed in one or more of the preceding claims, characterised in that the closure of the inertia switch (5) causes operation of switching means (25) positioned between the conventional alternator (23) and the electrical gasoline feed pump.

## Patentansprüche

1. Vorrichtung zur Unterbrechung des Stromes, der von einer Batterie eines motorisierten Fahrzeugs geliefert wird, mit: einem Trägheitsschalter (5), durch den ein erstes Relais (3) gesteuert wird, das mit einem normalerweise geschlossenen mechanischen Leistungsschalter (2) in Beziehung steht, der in der Versorgungsleitung mit den elektrischen Einrichtungen (6') des Fahrzeugs verbunden ist, und durch den erste Kontakte (14) gesteuert werden, die mit zusätzlichen Warn- und Sicherheitseinrichtungen (20, 21, 22) verbunden sind, wobei durch den Betrieb des Trägheitsschalters die Erregung des ersten Relais bestimmt wird, wodurch das Öffnen des mechanischen Leistungsschalters und das Einstellen oder Beibehalten der Warn- und Sicherheitseinrichtungen (20, 21, 22) in einen Zustand bewirkt wird, der für die Sicherheit und den Schutz der Insassen bevorzugt ist; dadurch gekennzeichnet, daß ein zweites Relais (13) vorgesehen ist, das mit dem Trägheitsschalter (5) und den ersten Kontakten (14) verbunden ist, wobei durch den Betrieb des Trägheitsschalters die Erregung des zweiten Relais (13) bestimmt wird, wodurch das Einstellen oder Beibehalten der Einrichtungen (20, 21, 22) in einen Zustand bewirkt wird, der für die Sicherheit der Insassen bevorzugt ist.

2. Vorrichtung nach Anspruch 1, dadurch gekennzeichnet, daß die zusätzlichen Einrichtungen (20, 21, 22) zwischen dem Leistungsschalter (2) und einem Pol einer Batterie (B) geschaltet sind und auf herkömmliche Weise durch Kontakteinrichtungen (11) gesteuert werden, die bei Betrieb des Trägheitsschalters (5) durch das zweite Relais (13) kurzgeschlossen werden,

3. Vorrichtung nach einem der vorhergehenden Ansprüche, dadurch gekennzeichnet, daß der mechanische Leistungsschalter (2) mit Hilfe eines manuell betätigbaren Tastschalters (9) geschlossen werden kann.

4. Vorrichtung nach einem der vorhergehenden Ansprüche, gekennzeichnet durch einen manuell betätigbaren, mechanischen Schalter (10) zum Sperren des ersten Relais (3).

5. Vorrichtung nach einem der vorhergehenden Ansprüche, gekennzeichnet durch einen manuell betätigbaren, elektrischen Schalter (8) zum Erregen des ersten Relais (3).

6. Vorrichtung nach einem oder mehreren der vorhergehenden Ansprüche, dadurch gekennzeichnet, daß durch das Schließen des Trägheitsschalters (5) der Betrieb von Schaltereinrichtungen (25) bewirkt wird, die zwischen der herkömmlichen Lichtmaschine (23) und der elektrischen Benzinpumpe angeordnet ist.

## Revendications

1. Appareil pour interrompre le courant fourni par la batterie d'une voiture à moteur, comprenant un interrupteur à inertie (5) commandant un premier relais (3) associé à un interrupteur en charge à commande mécanique normalement fermé (2) inséré dans la ligne d'alimentation de l'installation électrique (6') de la voiture, et commandant des premiers contacts (14) reliés aux équipements auxiliaires de signalisation et de sécurité (20, 21, 22), l'actionnement dudit interrupteur à inertie ayant pour effet d'exciter ledit premier relais, provoquant l'ouverture dudit interrupteur en charge à action mécanique et l'établissement ou le maintien d'un état favorable à la sécurité ou à la protection des utilisateurs desdits équipements de signalisation et de sécurité (20, 21, 22) raccordés auxdits premiers contacts (14) ; caractérisé en ce qu'il comprend un second relais (13) relié audit interrupteur à inertie (5) et auxdits premiers contacts (14), l'actionnement dudit interrupteur à inertie ayant pour effet d'exciter ledit second relais (13), assurant l'établissement ou le maintien d'un état favorable à la sécurité des utilisateurs desdits équipements (20, 21, 22).

2. Appareil selon la revendication 1, caractérisé en ce que les équipements auxiliaires (20, 21, 22) sont raccordés entre ledit interrupteur en charge (2) et un pôle de la batterie (B), et sont classiquement commandés par des moyens à contacteur (11) shuntés par le second relais (13) en cas d'actionnement de l'interrupteur à inertie (5).

3. Appareil selon l'une ou l'autre des revendications précédentes, caractérisé en ce que ledit interrupteur en charge à commande mécanique (2) peut être fermé au moyen d'un bouton-poussoir manuel (9).

4. Appareil selon l'une quelconque des revendications précédentes, caractérisé en ce qu'il comprend un interrupteur mécanique à commande manuelle (10) permettant d'inhiber le fonctionnement dudit premier relais (3).

5. Appareil selon l'une quelconque des revendications précédentes, caractérisé en ce qu'il comprend un interrupteur électrique à commande manuelle (8) permettant d'exciter ledit premier relais (3).

6. Appareil selon l'une ou plusieurs des revendications précédentes, caractérisé en ce que l'actionnement de l'interrupteur à inertie (5) provoque le fonctionnement de moyens de commutation (25) insérés entre l'alternateur classique (23) et la pompe électrique d'alimentation en carburant.
